# EUROPÄISCHE PATENTSCHRIFT

(11) **EP 0 492 195 B1**
(45) Veröffentlichungstag und Bekanntmachung des Hinweises auf die Patenterteilung: **15.02.1995**
(21) Anmeldenummer: 91120804.9
(22) Anmeldetag: 04.12.1991
(51) Int. Cl.: A01D 43/08, A01D 75/18

(54) **Feldhäcksler**
Forage harvester
Faucheuse-hacheuse

(30) Priorität: 13.12.1990 DE 4039720
(43) Veröffentlichungstag der Anmeldung: 01.07.1992
(73) Patentinhaber: CLAAS OHG, D-33426 Harsewinkel (DE)
(72) Erfinder: Isfort, Heinrich, W-4408 Dülmen (DE); Feist, Stefanie, W-4834 Harsewinkel (DE)

(56) Entgegenhaltungen:
- FR-A- 2 622 945
- GB-A- 616 119
- GB-A- 891 259
- US-A- 3 251 631
- US-A- 3 268 268
- PATENT ABSTRACTS OF JAPAN vol. 12, no. 466 (M-772)(3313) 7. Dezember 1988 & JP-A 63- 191 549 (Yamazaki Mazak Corp) 9 August 1988

## Beschreibung

Die Erfindung betrifft einen fahrbaren Feldhäcksler nach dem Oberbegriff des Anspruchs 1.

Ein derartiger Feldhäcksler ist bereits aus US-A-3 268 268 bekannt.

Aus der Praxis sind Schwenkeinrichtungen für den Auswurfkrümmer von Feldhäckslern bekannt, bei denen die Schwenkbewegung des Auswurfkrümmers gegenüber dem feststehenden Turm durch einen Hydraulik- bzw. Elektromotor erzeugt wird, der ein Schneckengetriebe in Bewegung setzt, wobei der Zahnkranz dem schwenkbaren Auswurfkrümmer zugeordnet ist und die Schnecke am feststehenden Turm gelagert ist. Das Schneckengetriebe befindet sich am Übergang vom feststehenden Turm zum Auswurfkrümmer. Mit derartigen Schwenkeinrichtungen lassen sich Auswurfkrümmer von Feldhäckslern um jeden beliebigen Winkelgrad gegenüber dem feststehenden Turm verschwenken. Es besteht nun während des Ernteeinsatzes die Gefahr, daß der Auswurfkrümmer beispielsweise mit dem Geäst von Wallhecken oder nahestehenden Bäumen kollidiert und dabei beschädigt wird. Neben der Gefahr der Beschädigung des Auswurfkrümmers besteht zudem die Gefahr, daß die Verschwenkeinrichtung selbst ebenfalls beschädigt wird. Der vorliegenden Erfindung liegt daher das Problem zugrunde, einen Feldhäcksler der eingangs näher bezeichneten Art so zu gestalten, daß Beschädigungen sowohl des Auswurfkrümmers wie auch der Verdreheinrichtung durch ungewollt auf den Auswurfkrümmer einwirkende Verdrehkräfte mit Sicherheit vermieden werden. Diese Aufgabe wird erfindungsgemäß dadurch gelöst, daß die Einrichtung zum Verdrehen des Auswurfkrümmers, nämlich Drehkranz und Schnecke bei außerordentlich auftretenden Verdrehkräften auf den Auswurfkrümmer sebsttätig außer Eingriff bringbar ist und darüber hinaus eine Sperrklinke die entkuppelte Stellung selbsttätig arretiert. Weitere vorteilhafte Ausführungsformen der Erfindung sind in den Unteransprüchen näher definiert.

Im folgenden soll die Erfindung an Hand eines Ausführungsbeispiels und mehrerer dieses schematisch darstellender Figuren näher erläutert werden. Dabei zeigt:
- Fig. 1: einen Feldhäcksler in der Seitenansicht
- Fig. 2: den in Fig. 1 mit strichpunktierten Linien eingekreisten Teil in vergrößerter Darstellung,
- Fig. 3: eine Ansicht von rechts auf den in Fig. 2 dargestellten Teil in vergrößerter Darstellung,
- Fig. 4: eine Draufsicht auf den in Fig. 3 dargestellten Teil
und
- Fig. 5: eine Ansicht nach der Schnittlinie V-V in Fig. 4.

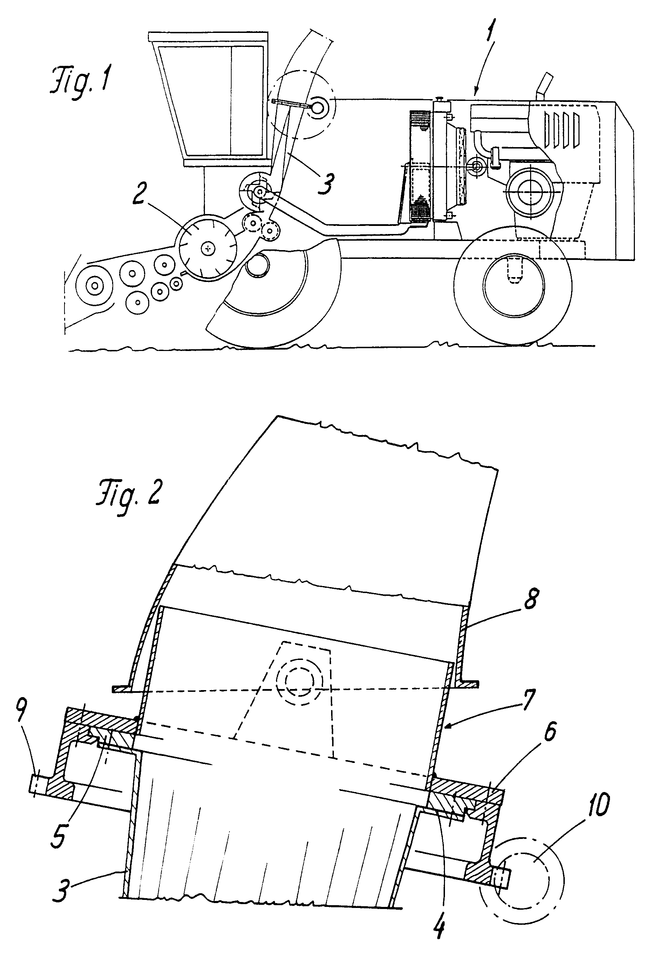

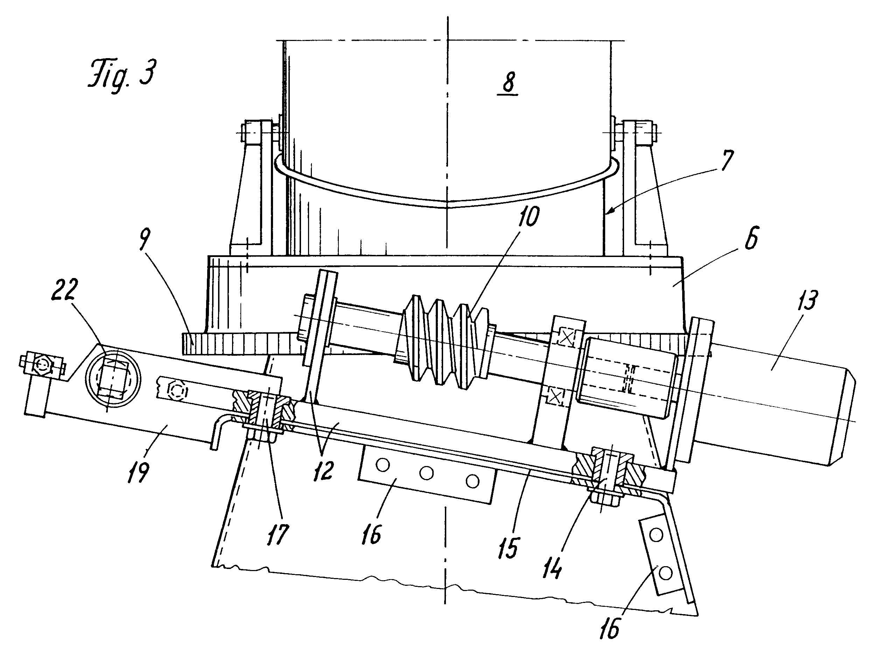

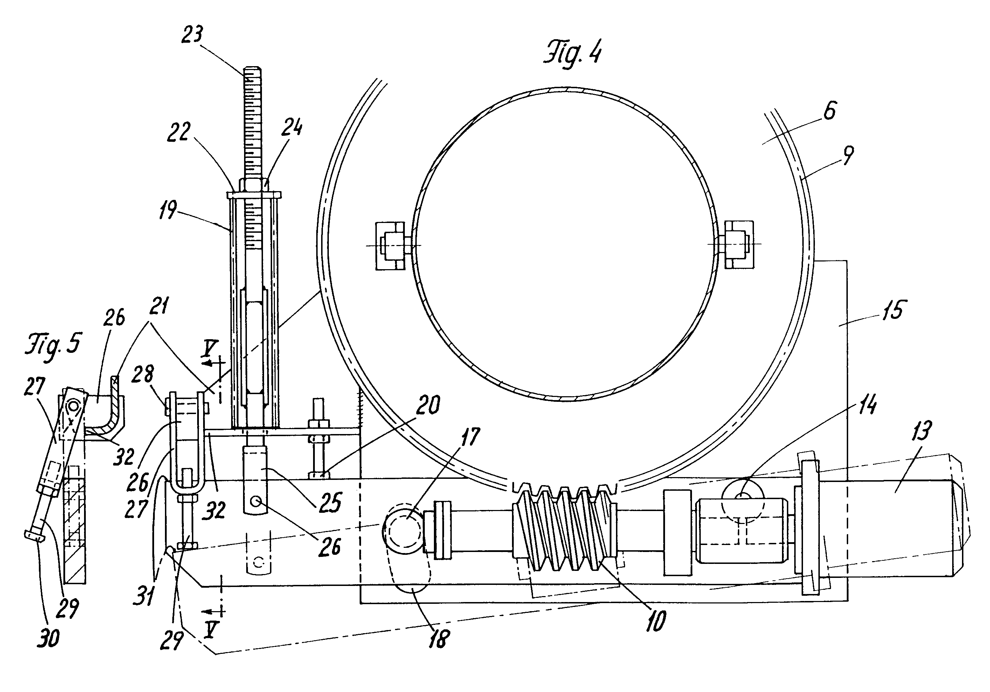

Mit 1 ist ein Feldhäcksler bezeichnet, wobei dem eigentlichen Häckselaggregat 2 ein fest mit dem Feldhäcksler verbundener Auswurfturm 3 zugeordnet ist. Das abgabeseitige Ende dieses Turmes 3 weist einen Kragen 4 auf, mit dem eine Scheibe 5 fest verbunden ist. Diese Scheibe 5 wird von einem Drehkranz 6 umgriffen, welcher mit dem verdrehbaren Auswurfkrümmer 7 verschweißt ist. In an sich bekannter Weise besteht dieser Auswurfkrümmer 7 aus einem unteren Teil und einem oberen gegenüber dem unteren kippbaren Teil 8. Aus Fig. 2 ist zu erkennen, daß der Drehkranz 6 eine äußere Verzahnung 9 aufweist, in die eine Schnecke 10 eingreift. Diese Antriebsschnecke 10 ist, wie die Fig. 3 und 4 erkennen lassen, beidendig auf einem Lagerbock 12 drehbar gelagert, wobei die Schnecke 10 ihren Antrieb über einen Hydraulikmotor 13 erhält, der ebenfalls mit dem Lagerbock 12 verbunden ist. Letzterer ist über eine Achse 14 mit einer Tragplatte 15 schwenkbar verbunden, wobei die Tragplatte über Befestigungsmittel 16 mit dem Turm 3 fest verbunden ist. Neben der Achse 14 weist der Lagerbock noch einen Zapfen 17 auf, der in einem Langloch 18 der Tragplatte 15 geführt ist. In der in Fig. 4 mit vollen Linien dargestellten Stellung des Lagerbockes 12 wird dieser über eine Druckfeder 19 gegen einen Anschlag 20 gezogen, welcher aus einer Einstellschraube gebildet ist, so daß die Eingriffstiefe der Schnecke 10 in die Verzahnung 9 so eingestellt werden kann, daß über die Feder 19 keine ungewollten Kräfte hinsichtlich des Zahneingriffs erzeugt werden. Die Feder 19 stützt sich einendig an einem abgewinkelten Halteblech 21 ab, welches mit der Tragplatte 15 verschweißt ist. Das andere Ende der Druckfeder 19 stützt sich an einer Anschlagplatte 22 ab, welche eine Gewindestange 23 umgreift, auf die eine Stellmutter 24 aufgeschraubt ist, gegen die sich die Anschlagplatte 22 anlegt. Die Gewindestange 23 durchdringt den Schenkel des abgewinkelten Haltebleches 21, gegen den sich die Druckfeder 19 abstützt und trägt an dem diesen Schenkel durchdringenden Ende ein Gabelstück 25. Letzteres ist über einen Bolzen 26 mit dem Lagerbock 12 verbunden, so daß dieser gegen den Anschlag 20 gezogen wird. An das äußere, dem Auswurfkrümmer 7,8 abgewandte Ende des abgewinkelten Haltebleches 21 ist ein Bock 26 angeschweißt, der von einem U-förmigen Bügel 27 umgriffen und an dem Bock 26 über einen Bolzen 28 schwenkbar gehalten ist. In den die beiden Schenkel des Bügels 27 verbindenden Steg ist eine Schraube 29 eingedreht, wobei in der in Fig. 4 mit vollen Linien dargestellten Stellung des Lagerbockes 12 der U-förmige Bügel 27 auf dem Lagerbock 12 aufliegt.

Die in den Fig. 3 und 4 dargestellte Stellung der Schnecke 10 entspricht der Betriebsstellung, in der über den Motor 13 und die Schnecke 10, die in die Verzahnung 9 eingreift, der Auswurfkrümmer 7, 8 verdreht werden kann. Wird nun aus einer beliebigen Drehstellung des Auswurfkrümmers 7, 8 heraus dieser beispielsweise durch herunterhängende Äste einer Windschutzhecke unbeabsichtigt verdreht, drückt die Verzahnung 9 des Auswurfkrümmers 8, 7 die Schnecke 10 aus ihrer Verzahnung heraus, wobei der Lagerbock 12 um die Achse 14 mit Bezug auf Fig. 4, gegen Uhrzeigersinn verschwenkt wird. Seine Schwenkbewegung ist dabei begrenzt durch den im Langloch 18 geführten Zapfen 17. In der ausgeschwenkten Stellung fällt die aus Bügel 27 und Schraube 29 gebildete Sperrklinke nach unten, wobei sich der Schraubenkopf 30 vor die Kante 31 des Lagerbockes 12 legt. Der U-förmige Bügel 27 liegt dabei auf der oberen Kante 32 des abgewinkelten Haltebleches 21 auf (s. gestrichelte Lage der Sperrklinke in Fig. 5). Soll nun die Schnecke 10 wieder in Eingriff mit der Verzahnung 9 des Auswurfkrümmers gebracht werden, muß der Fahrer die Sperrklinke 27, 29 und 30 anheben, so daß die Feder 19 den Lagerbock 12 wieder gegen den Anschlag 20 in Grundstellung ziehen kann. Die ausgeschwenkte Lage des Lagerbockes 12 ist in der Fig. 4 mit gestrichelten Linien dargestellt.

## Patentansprüche

1. Fahrbarer Feldhäcksler
mit einem dem Häckselaggregat (2) nachgeordneten maschinenfesten Turm (3),
einem mit dem Turm (3) verbundenen Auswurfkrümmer (7) für das Häckselgut, und
mit einer mit dem Turm (3) und dem Auswurfkrümmer (7) verbundenen, einen Drehkranz (6) und eine Schnecke (10) aufweisenden Antriebseinrichtung, mittels der der Auswurfkrümmer (7) relativ zum Turm (3) drehbar ist,
**dadurch gekennzeichnet**,
daß die Antriebseinrichtung (6, 10, 13) bei außerordentlich auftretenden Drehkräften auf den Auswurfkrümmer (7) durch Außereingriffbringen von dem Drehkranz (6) und der Schnecke (10) selbsttätig entkuppelbar ist und daß eine Sperrklinke (27, 29, 30) vorgesehen ist, mit deren Hilfe die entkuppelte Stellung selbsttätig arretierbar ist.

2. Feldhäcksler nach Anspruch 1, **dadurch gekennzeichnet**, daß die Sperrklinke (27, 29, 30) an einem etwa horizontalen Bolzen (28) schwenkbar gelagert ist.

3. Feldhäcksler nach Anspruch 2, **dadurch gekennzeichnet**, daß die Sperrklinke einen U-förmigen Bügel (27) aufweist, die freien Enden der Schenkel des Bügels (27) an dem Bolzen (28) gelagert sind und in den die beiden Schenkel des Bügels (27) verbindenden Steg eine Stellschraube (29) eingedreht ist.

4. Feldhäcksler nach einem der vorhergehenden Ansprüche, **dadurch gekennzeichnet**, daß die Antriebseinrichtung (6, 10, 13) auf einem Lagerbock (12) gelagert ist, dessen eines Ende Schwenkbar an dem Turm (3) befestigt und an dessen anderem, freien Ende die Sperrklinke (27, 29, 30) angreift.

5. Feldhäcksler nach Anspruch 4, **dadurch gekennzeichnet**, daß die Sperrklinke (27, 29, 30) derart angeordnet ist, daß sie in der Betriebsstellung der Antriebseinrichtung (6, 10, 13) auf dem freien Ende des Lagerbocks (12) aufliegt und in der abgeschwenkten Stellung der Antriebseinrichtung (6, 10, 13), in der sich die Antriebseinrichtung außer Eingriff mit dem Auswurfkrümmer (7) befindet, nach unten in die Ebene des Lagerbocks (12) fällt und sich vor die Kante (31) des Lagerbocks (12) legt, so daß die Antriebseinrichtung (6, 10, 13) in ihrer abgeschwenkten Stellung arretiert ist.

6. Feldhäcksler nach Anspruch 5, **dadurch gekennzeichnet**, daß die in der abgeschwenkten Stellung der Antriebseinrichtung (6, 10, 13) vor der Kante (31) des Lagerbocks (12) angeordnete Sperrklinke (27, 29, 30) auf der oberen Kante (32) eines mit dem Turm (3) verbundenen, abgewinkelten Halteblechs (21) aufliegt.

7. Feldhäcksler nach einem der Ansprüche 4 bis 6, **dadurch gekennzeichnet**, daß die Antriebseinrichtung (6, 10, 13) mittels der Kraft einer an dem Lagerbock (12) angreifenden Feder (19) in Richtung auf ihre Betriebsstellung hin belastet und gegen einen vorzugsweise einstellbaren Anschlag (20) preßbar ist.

8. Feldhäcksler nach einem der Ansprüche 4 bis 7, **dadurch gekennzeichnet**, daß der Schwenkweg der Antriebseinrichtung (6, 10, 13) mittels eines Zapfens (17) begrenzt ist, welcher an dem Lagerbock (12) befestigt und in einem Langloch (18) einer unterhalb des Lagerbocks (12) angeordneten Tragplatte (15) geführt ist.

9. Feldhäcksler zumindest nach den Ansprüchen 6 und 7, **dadurch gekennzeichnet,** daß die Feder (19) mit ihrem einen Ende an dem Halteblech (21) und mit ihrem anderen Ende an einer Anschlagplatte (22) abgestützt ist, welche eine Gewindestange (23) umgreift, auf die eine sich gegen die Anschlagplatte (22) anlegende Stellmutter (24) aufgeschraubt ist, und das der Stellmutter (24) gegenüberliegende Ende der Gewindestange (23) mit dem Lagerbock (12) verbunden ist.

10. Feldhäcksler zumindest nach den Ansprüchen 6 bis 8, **dadurch gekennzeichnet**, daß Sperrklinke (27, 29, 30), Feder (19) und Anschlag (20) mit dem Halteblech (21) verbunden sind, das an der Tragplatte (15) befestigt ist.

## Claims

1. A mobile forage harvester comprising a tower (3) which is fixed with respect to the machine and which is arranged downstream of the chopping unit (2), a curved discharge duct (7) for the chopped material, which is connected to the tower (3), and a drive bans which is connected to the tower (3) and the curved discharge duct (7) and which has a turntable member (6) and a screw and by means of which the curved discharge duct (7) can be rotated relative to the tower (3), characterised in that the drive bans (6, 10, 13) can be automatically decoupled in the event of extraordinarily occurring rotary forces on the curved discharge duct (7) by disengagement of the turntable member (6) and the screw (10) and that there is provided a locking latch (27, 29, 30), by bans of which the decoupled position can be automatically arrested.

2. A forage harvester according to claim 1 characterised in that the locking latch (27, 29, 30) is mounted pivotably on an approximately horizontal pin (28).

3. A forage harvester according to claim 2 characterised in that the locking latch has a U-shaped loop member (27), the free ends of the limbs of the loop member (27) are mounted on the pin (28), and an adjusting screw (29) is screwed into the web portion connecting the two limbs of the loop member (27).

4. A forage harvester according to one of the preceding claims characterised in that the drive bans (6, 10, 13) is mounted on a bunting support (12) of which one end is pivotably fixed to the tower (3) and the other free end of which is engaged by the locking latch (27, 29, 30).

5. A forage harvester according to claim 4 characterised in that the locking latch (27, 29, 30) is arranged in such a way that in the operative position of the drive bans (6, 10, 13) it lies on the free end of the bunting support (12) and in the position of the drive means (6, 10, 13) in which it is pivoted away and in which the drive means is out of engagement with the curved discharge duct (7), the locking latch drops downwardly into the plane of the bunting support (12) and is disposed in front of the edge (31) of the bunting support (12) so that the drive means (6, 10, 13) is arrested in its position in which it is pivoted away.

6. A forage harvester according to claim 5 characterised in that the locking latch (27, 29, 30) which is arranged in front of the edge (31) of the mounting support (12) in the position of the drive bans (6, 10, 13) in which it is pivoted away bears on the upper edge (32) of an angled holding plate (21) which is connected to the tower (3).

7. A forage harvester according to one of claims 4 to 6 characterised in that the drive bans (6, 10, 13) is loaded towards its operative position by means of the force of a spring (19) acting on the bunting support (12) and can be pressed against a preferably adjustable stop (20).

8. A forage harvester according to one of claims 4 to 7 characterised in that the pivotal travel of the drive means (6, 10, 13) is limited by means of a projection (17) which is fixed to the mounting support (12) and which is guided in a slot (18) in a carrier plate (15) disposed beneath the bunting support (12).

9. A forage harvester at least according to claims 6 and 7 characterised in that the spring (19) is supported with its one end at the holding plate (21) and with its other end at a stop plate (22) which embraces a screwthreaded rod (23) on to which is screwed an adjusting nut (24) which bears against the stop plate (22), and the end of the screwthreaded rod (23), that is remote from the adjusting nut (24), is connected to the mounting support (12).

10. A forage harvester at least according to claims 6 to 8 characterised in that the locking latch (27, 29, 30), the spring (19) and the stop (20) are connected to the holding plate (21) which is fixed to the carrier plate (15).

## Revendications

1. Ramasseuse-hacheuse mobile comprenant une tour (3) fixée à la machine et située à la suite de l'unité de hachage (2), un raccord d'éjection (7) relié à la tour (3) pour les produits hachés, et un dispositif d'entraînement comportant une couronne rotative (6) et une vis sans fin (10) relié à la tour (3) et au raccord d'éjection (7), au moyen duquel le raccord d'éjection (7) peut être entraîné en rotation par rapport à la tour (3), caractérisée en ce que le dispositif d'entraînement (6, 10, 13) peut être désaccouplé automatiquement, quand des forces d'entraînement en rotation exceptionnelles sont appliquées au raccord d'éjection (7), par dégagement de la couronne dentée (6) de la vis sans fin (10), et en ce qu'il est prévu un cliquet de blocage (27, 29, 30) à l'aide duquel la position désaccouplée est bloquée.

2. Ramasseuse-hacheuse selon la revendication 1, caractérisée en ce que le cliquet de blocage (27, 29, 30) est monté de façon pivotante sur un axe sensiblement horizontal (28).

3. Ramasseuse-hacheuse selon la revendication 2, caractérisée en ce que le cliquet de blocage comprend un étrier en forme de U (27) dont les extrémités libres des branches sont montées sur l'axe (28), et une vis de réglage (29) est vissée dans la partie de dos reliant les deux branches de l'étrier (27).

4. Ramasseuse-hacheuse selon l'une quelconque des revendications précédentes, caractérisée en ce que le dispositif d'entraînement (6, 10, 13) est monté sur un support (12) dont une extrémité est fixée de façon pivotante sur la tour (3) et dont l'autre extrémité libre coopère avec le cliquet de blocage (27, 29, 30).

5. Ramasseuse-hacheuse selon la revendication 4, caractérisée en ce que le cliquet de blocage (27, 29, 30) est monté de façon à reposer, dans la position de fonctionnement du dispositif d'entraînement (6, 10, 13), sur l'extrémité libre du support (12), et tombe vers le bas dans le plan du support (12) dans la position pivotée du dispositif d'entraînement (6, 10, 13) dans laquelle le dispositif d'entraînement se trouve hors de prise avec le raccord d'éjection (7), et se dispose à l'avant du bord (31) du support (12) de manière que le dispositif d'entraînement (6, 10, 13) soit bloqué dans sa position pivotée.

6. Ramasseuse-hacheuse selon la revendication 5, caractérisée en ce que le cliquet de blocage (27, 29, 30) disposé dans la position pivotée du dispositif d'entraînement (6, 10, 13) à l'avant du bord (31) du support (12) repose sur le bord supérieur (32) d'une tôle de retenue coudée (21) reliée à la tour (3).

7. Ramasseuse-hacheuse selon l'une quelconque des revendications 4 à 6, caractérisée en ce que le dispositif d'entraînement (6, 10, 13) est chargé au moyen de la force d'un ressort (19) coopérant avec le support (12) en direction de sa position de fonctionnement et peut être pressé contre une butée (20) de préférence réglable.

8. Ramasseuse-hacheuse selon l'une quelconque des revendications 4 à 7, caractérisée en ce que le parcours de pivotement du dispositif d'entraînement (6, 10, 13) est limité par un tourillon (17) qui est fixé sur le support (12) et guidé dans un trou allongé (18) d'une plaque de support (15) disposée au-dessous du support (12).

9. Ramasseuse-hacheuse selon les revendications 6 et 7, caractérisée en ce que le ressort (19) s'appuie par une extrémité contre la tôle de retenue (21) et par son autre extrémité contre une plaque de butée (22) qui entoure une tige filetée (23) sur laquelle est vissé un écrou de réglage (24) appliqué contre la plaque de butée (22), et en ce que l'extrémité de la tige filetée (23) qui est à l'opposé de l'écrou de réglage (24) est reliée au support (12).

10. Ramasseuse-hacheuse selon les revendications 6 à 8, caractérisée en ce que le cliquet de blocage (27, 29, 30), le ressort (19) et la butée (20) sont reliés à la tôle de retenue (21) qui est fixée à la plaque de support (15).
